# FASCICULE DE BREVET EUROPEEN

(11) **EP 2 656 487 B1**
(45) Date de publication et mention de la délivrance du brevet: **15.03.2017**
(21) Numéro de dépôt: 11817387.1
(22) Date de dépôt: 19.12.2011
(51) Int. Cl.: H02K 5/18, H02K 9/28, H02K 11/04, H02K 5/20, H02K 9/06

(54) **DISPOSITIF REGULATEUR DE TENSION POUR UNE MACHINE ELECTRIQUE TOURNANTE, PALIER D'UNE TELLE MACHINE EQUIPE D'UN TEL DISPOSITIF ET UNE TELLE MACHINE COMPORTANT UN TEL PALIER**
SPANNUNGSREGLER FÜR EINE ELEKTRISCHE DREHMASCHINE, LAGER FÜR EINE SOLCHE MASCHINE MIT EINER SOLCHEN VORRICHTUNG UND SOLCHE MASCHINE MIT EINEM LAGER
VOLTAGE REGULATOR DEVICE FOR A ROTARY ELECTRIC MACHINE, BEARING FOR SUCH A MACHINE EQUIPPED WITH SUCH A DEVICE AND SUCH A MACHINE COMPRISING SUCH A BEARING

(30) Priorité: 20.12.2010 FR 1060780
(43) Date de publication de la demande: 30.10.2013
(73) Titulaire: Valeo Equipements Electriques Moteur, 94046 Créteil Cedex (FR)
(72) Inventeur: DUGUE, Christophe, F-91120 Palaiseau (FR); LECOLE, Brice, F-75012 Paris (FR); WALME, Benoit, F-78810 Feucherolles (FR)
(74) Mandataire: Ribeil, Alexandre
(86) Numéro de dépôt international: PCT/FR2011/053045
(87) Numéro de publication internationale: WO 2012/085423

(56) Documents cités:
- EP-A2- 1 326 321
- US-A- 5 907 203
- US-A1- 2007 035 188

## Description

### Domaine de l'invention

La présente invention concerne un dispositif régulateur de tension pour une machine électrique tournante, notamment polyphasée, telle qu'un alternateur et/ou un alterno-démarreur de véhicule automobile.

La présente invention concerne également un palier d'une telle machine électrique tournante équipé d'un tel dispositif régulateur de tension et d'un dispositif de redressement de courant.

La présente invention concerne enfin une telle machine électrique, tournante équipée d'un tel palier.

### Etat de la technique

Il est aujourd'hui connu des alternateurs de véhicules automobiles comportant un stator bobiné entourant un rotor et au moins un bobinage d'excitation du rotor. Ils fonctionnent comme générateur d'électricité pour alimenter un réseau de bord du véhicule et pour recharger sa batterie. Pour cela, le rotor de l'alternateur est entrainé par le moteur thermique du véhicule via un dispositif de transmission de mouvement et son bobinage d'excitation est alimenté par un courant électrique, dit courant d'excitation. Le rotor, ainsi magnétisé, génère une force électromotrice de la sorte qu'un courant électrique alternatif est induit dans le bobinage du stator de la machine, configuré pour être relié au réseau de bord et à la batterie par l'intermédiaire d'au moins un pont redresseur de courant alternatif en courant continu.

Il est nécessaire de réguler la tension délivrée au réseau de bord et à la batterie du véhicule pour que les récepteurs du réseau de bord et la batterie ne soient pas détériorés et travaillent de manière correcte et fiable. Pour cela, on contrôle le courant d'excitation du bobinage d'excitation.

A cette fin, il est connu des dispositifs régulateur de tension visant à contrôler le courant d'excitation à l'aide d'un circuit électronique, comportant un ou plusieurs composant électroniques, embarqué au niveau de l'alternateur. Ces circuits comprennent des porte-balais munis d'au moins un logement accueillant un balai permettant d'établir une liaison électrique avec le rotor de la machine électrique pour son alimentation en courant d'excitation.

Dans le document US 2007/0035188 le régulateur comporte un boîtier comportant une première portion incluant le porte-balais, une deuxième portion incluant le ou les composants électroniques et une troisième portion incluant un connecteur. La première portion est dotée de deux trous pour la fixation du régulateur à l'aide de boulons. Il en est de même de la troisième portion. Les quatre trous de fixation du régulateur sont donc bouchés par des boulons.

Il a été constaté que le fonctionnement des dispositifs connus n'étaient plus satisfaisant lorsque les conditions de température devenaient particulièrement sévères, par exemple supérieures à 120°, avec l'augmentation de puissance des machines électriques et les exigences de compacité obligeant à positionner le dispositif régulateur de tension et l'alternateur au plus près du moteur thermique du véhicule automobile. Il a en particulier été constaté que le fonctionnement des porte-balais pouvait être altéré.

### Objet de l'invention

L'invention se propose de résoudre les problèmes précédents et concerne un dispositif régulateur de tension pour une machine électrique tournante, notamment alternateur et/ou alterno-démarreur de véhicule automobile, comprenant un support et un ou plusieurs composants électroniques, aptes à participer à la commande de ladite machine électrique, le support comprenant une première partie, où le ou les composants son montés, ladite première partie présentant un bord, équipé d'un porte-balais muni d'au moins un logement, dit logement porte-balai, apte à accueillir un balai permettant d'établir une liaison électrique avec un rotor de la machine électrique.

Selon l'invention, ledit dispositif est configuré pour autoriser une circulation d'air à travers ladite première partie du support, au contact dudit porte-balais, ledit dispositif comportant en outre une ou des fentes, dites de circulation d'air, lesdites fentes étant prévues à travers le support entre ladite première partie et ledit porte-balais, une fente de circulation d'air s'allongeant le long d'une face du porte-balais. On peut ainsi assurer une dissipation de chaleur au niveau de cette partie du dispositif régulateur et améliorer le fonctionnement des balais. En outre cela permet également de diminuer la température au niveau du circuit électronique que comporte le dispositif régulateur de tension du fait que l'on diminue la chaleur transmise par les traces électriques reliant le porte-balais au dit circuit électronique.

Selon d'autres caractéristiques procurant d'autres avantages et prises isolément ou en combinaison :
- la ou lesdites fentes de circulation d'air sont prévues de contour fermé,
- le dispositif comprend en outre un dissipateur de chaleur, en relation d'échange thermique avec le ou lesdits composants, ledit support étant prévu apte à être monté sur la machine électrique de façon à ce que le dissipateur puisse orienter un flux d'air vers une zone de dépression prévue entre ledit dispositif régulateur et ladite machine,
- le dissipateur comprend une base, en relation d'échange thermique avec le ou lesdits composants électroniques, et des ailes, s'étendant à partir de ladite base, ledit support étant apte à être monté sur la machine électrique de façon à ce que lesdites ailes puissent orienter le flux d'air vers ladite zone de dépression,
- lesdites ailes s'étendent sensiblement perpendiculairement par rapport à ladite base, ledit dissipateur présentant un axe D, parallèle aux ailes, orienté vers ladite zone de dépression,
- le ou les logements porte-balais sont orientés selon une direction D' et l'axe D du dissipateur et l'axe D' du logement porte-balai forment un angle supérieur à 10°, par exemple compris entre 40 et 90°, notamment de l'ordre de 66°.

On pourra aussi prévoir que le dissipateur comprend deux dites ailes s'étendant depuis des bords latéraux de la base, de façon à présenter un profil en U, par exemple obtenu par pliage. Le dissipateur comprend alors éventuellement au moins une ailette supplémentaire de dissipation de chaleur, placée, par exemple de façon médiane, entre lesdites deux ailes. La ou lesdites ailes sont rapportées par exemple par soudage sur la base.

Le dissipateur de chaleur et la ou les ailettes supplémentaires sont en matériau caloporteur.

Grâce à cette ou ces ailettes supplémentaires, on améliore encore la dissipation de chaleur. Selon ce mode de mise en oeuvre de l'invention, on pourra utiliser les caractéristiques suivantes :
- la ou lesdites ailettes se prolongent axialement vers l'intérieur au-delà de la base,
- la ou lesdites ailettes présentent un prolongement, adapté à être placé en regard d'une ouverture centrale d'entrée d'air de ladite machine électrique,
- ledit prolongement est apte à être placé entre ledit support et l'ouverture centrale de ladite machine électrique,
- la ou lesdites ailettes présentent une forme globalement en forme de L,
- le dissipateur comprend plusieurs ailettes supplémentaires de dissipation de chaleur,
- la ou lesdites ailettes supplémentaires sont dans la même matière que le dissipateur.

Toujours de façon alternative ou complémentaire, ledit dissipateur est réalisé en cuivre et se trouve en contact direct ou indirect avec le ou les composants. Les éventuelles ailettes supplémentaires seront alors en cuivre également. On améliore encore de la sorte la dissipation de chaleur.

L'invention concerne aussi un palier de machine électrique équipé d'un dispositif régulateur tel que décrit plus haut et une machine électrique tournante équipée d'un tel palier.

Selon un mode de mise en oeuvre, le support du dispositif régulateur recouvre au moins une ouverture d'air du palier et la ou les fentes dudit dispositif sont implantées en regard de l'une ou plusieurs desdites ouvertures d'air.

Le palier pourra être équipé, en outre, d'un dispositif de redressement du courant produit par la machine électrique pour formation d'un agencement de redressement de courant. Ce dernier pourra comporter une ouverture centrale au niveau de laquelle la zone de dépression évoquée plus haut est située.

Ladite ouverture centrale se trouve, notamment, dans le prolongement d'une ouverture centrale du palier, lesdites ouvertures centrales étant destinées à permettre le passage de l'arbre de la machine à laquelle le dispositif régulateur de tension appartient.

On appréciera que l'on ne modifie pas de manière profonde le régulateur de tension. Ainsi on peut utiliser un régulateur conventionnel et réaliser une ou plusieurs fentes à travers le support entre la première partie et le porte balais. Par exemple dans le document US 2007/0035188 on peut réaliser une ou plusieurs fentes entre le porte-balais et le dissipateur de chaleur. La solution ne fait pas appel à des pièces supplémentaires, telle qu'une entretoise. La solution est donc simple et économique.

L'invention sera mieux comprise à la lumière de la description suivante qui n'est donnée qu'à titre indicatif et qui n'a pas pour but de la limiter, accompagnée des dessins joints.

### Brève description des dessins

- la figure 1 illustre selon un plan de coupe radiale un exemple de réalisation d'une machine électrique selon l'invention,
- la figure 2 est une vue en perspective d'une partie d'extrémité axiale d'une variante de réalisation de ladite machine, représentée de façon éclatée,
- la figure 3 est une vue de dessus d'un exemple de réalisation d'un dispositif de commande selon l'invention,
- la figure 4 est une vue en coupe effectuée selon l'axe IV-IV illustré à la figure 3,
- la figure 5 est une vue en perspective illustrant une variante de réalisation du dispositif de commande selon l'invention.

### Description d'exemples de réalisation de l'invention

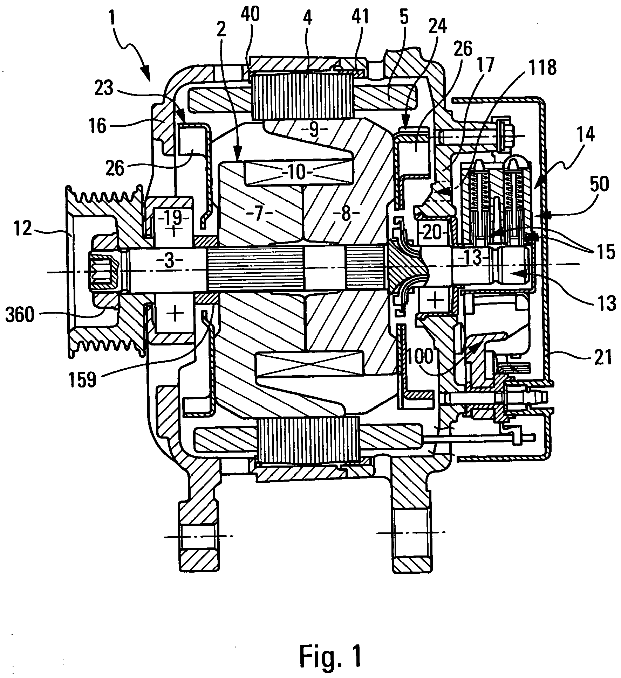

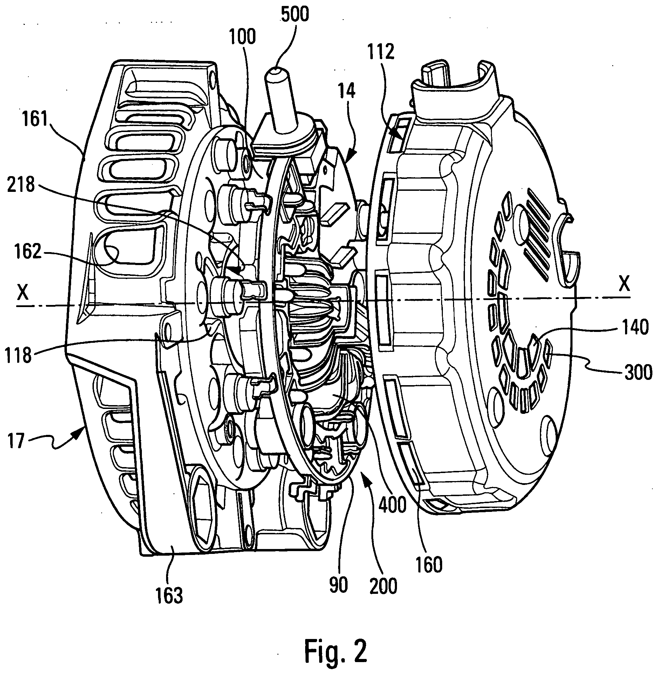

Nous allons tout d'abord décrire un exemple de machine électrique dans lequel un dispositif régulateur conforme à l'invention peut être employé, ceci en relation avec les figures 1 et 2.

Comme illustré à la figure 1, ladite machine, notamment prévue polyphasée comporte, par exemple, un carter 1 et, à l'intérieur de celui-ci, un arbre 3, un rotor 2 solidaire en rotation de l'arbre 3 et un stator 4 bobiné qui entoure le rotor 2 avec présence d'un faible entrefer, non-visible sur la figure.

Ce stator 4 comporte, par exemple, un corps en forme d'un paquet de tôles doté d'encoches équipées d'isolant d'encoche pour le montage du bobinage du stator 4. Celui-ci comprend plusieurs phases qui pourront comporter chacune au moins un enroulement formant de part et d'autre du corps du stator un chignon 5. Les sorties des phases sont connectées, par exemple, en triangle ou en étoile et reliées à un connecteur appartenant à un dispositif de redressement d'un courant alternatif en un courant continu, servant à alimenter le réseau de bord et recharger la batterie du véhicule automobile.

Le rotor, prévu inducteur par l'intermédiaire d'au moins un bobinage inducteur 10 associé au rotor, crée un courant induit alternatif dans le bobinage du stator 4 lorsque l'arbre 3 tourne. Ce courant est redressé en courant continu par l'intermédiaire du dispositif de redressement de courant alternatif en courant continu.

Le rotor est ici un rotor à griffes, comme décrit par exemple dans les documents US 2002/0175589 A1 et EP 0 454 039 A1, comprenant deux roues polaires 7, 8 axialement juxtaposées et présentant chacune un flasque transversal pourvu à sa périphérie externe de dents 9 de forme trapézoïdale dirigées axialement vers le flasque de l'autre roue polaire, la dent d'une roue polaire pénétrant dans l'espace existant entre deux dents 9 adjacentes de l'autre roue polaire. Un bobinage d'excitation 10 est implanté axialement entre les flasques des roues 7, 8. Ce bobinage 10 est porté par un noyau cylindrique en deux parties appartenant chacune à l'un des flasques des roues 7, 8. En variante le noyau est monobloc en étant distinct des flasques des roues 7, 8. L'arbre 3 pourra présenter des portions moletées pour la fixation des roues polaires 7, 8.

Lorsque le bobinage d'excitation 10 est alimenté électriquement, le rotor 2, en matériau ferromagnétique, est magnétisé et devient un rotor inducteur avec formation de pôles magnétiques Nord/Sud au niveau des dents d'orientation axiale des roues polaires 7, 8.

En variante, le rotor peut être à pôles saillants, comme décrit par exemple dans le document WO 02/054566, et comporter alors plusieurs bobinages d'excitation enroulés chacun autour d'un tel pôle et montés en série comme visible dans les figures 1 et 2 de ce document.

En variante, le rotor comporte deux roues polaires à griffes et deux bobinages d'excitation comme décrits dans le document FR 2 857 517.

Toujours en variante, le rotor est également muni d'aimants permanents.

L'arbre 3 du rotor 2 porte, dans le mode de réalisation de la figure 1, à son extrémité avant une poulie 12 appartenant à un dispositif de transmission de mouvements entre l'alternateur et le moteur thermique du véhicule automobile. Ledit dispositif de transmission comprend au moins une courroie, non représentée, par exemple entrainée par un vilebrequin du moteur thermique.

Dans l'exemple illustré, l'arbre 3 du moteur porte à son extrémité arrière des bagues collectrices 13 reliées par des liaisons filaires aux bornes du ou des bobinages d'excitation 10 du rotor 2 du type de ceux décrits dans le document FR 2 710 200, par exemple par l'intermédiaire d'un collecteur. Des balais 15 sont disposés de façon à frotter sur les bagues collectrices 13. Ces balais sont logés dans un porte-balais 50 appartenant, dans l'exemple de réalisation illustré, au dispositif régulateur de tension 14 conforme à l'invention qui sera décrit plus loin. En pratique la bague collectrice la plus proche de l'extrémité arrière de l'arbre 3 est reliée à la masse.

Le carter 1 est, par exemple, en deux parties, à savoir un flasque avant 16, appelé palier avant, adjacent à la poulie 12 et un flasque arrière 17, appelé palier arrière, portant dans ce mode de réalisation le dispositif régulateur de tension 14 et le dispositif de redressement de courant alternatif en courant continu.

Les paliers 16, 17 sont métalliques, ici en Aluminium. Ils sont de forme creuse dans cette réalisation. En variante, l'un au moins de paliers est de forme plate. Ces paliers 16, 17 pourront comporter chacun, centralement, un roulement à billes respectivement 19 et 20 pour le montage à rotation de l'arbre 3. Dans le mode de réalisation de la figure 1, une entretoise 159 est intercalée entre la bague interne du roulement 19 et la roue polaire 7, la poulie 12 étant en appui sur la bague interne du roulement 19 en étant fixée sur l'extrémité avant de l'arbre 3 via un écrou 360. Ces paliers 16, 17 sont ajourés pour permettre le refroidissement de l'alternateur par une circulation d'air engendrée par la rotation d'au moins un ventilateur. Les paliers 16, 17 présentent chacun une ouverture centrale pour le passage de l'extrémité axiale concerné de l'arbre 3.

Ce ventilateur est, dans un mode de réalisation non représenté, externe en étant adjacent à la poulie 12. Dans la figure 1 le ventilateur est interne en étant logé dans le carter. A cette fin, le rotor 2 porte au moins à l'une de ses extrémités axiales un ventilateur destiné à assurer cette circulation de l'air. Dans l'exemple représenté, un ventilateur noté 23 est prévu sur la face frontale avant du rotor et un autre ventilateur 24, plus puissant, sur la face arrière, chaque ventilateur étant pourvu d'une pluralité de pâles 26.

En variante, pour générer le flux d'air servant au refroidissement du moteur, il pourra être utilisé une turbine ou pompe centrifuge tel que cela est décrit dans le document FR 2 744 575.

En variante encore, le palier équipé du dispositif régulateur de tension pourra être refroidi par air tandis que l'autre palier est refroidi par eau.

Dans le cas de palier équipé de ventilateurs, les paliers 16, 17 comportent un fond globalement d'orientation transversale par rapport à l'axe de l'arbre 3 constituant l'axe de rotation et de symétrie axiale de la machine. Les fonds sont dotés d'une pluralité d'entrée d'air et sont prolongés chacun à leur périphérie externe par une jupe globalement d'orientation axiale par rapport à l'axe de l'arbre 3. La jupe est dotée d'une pluralité d'ouvertures de sortie d'air. Autrement dit, grâce aux ventilateurs, il est engendré une circulation de l'air entre les ouvertures d'entrée et de sortie d'air, le flux d'air pénétrant dans l'alternateur de façon axial pour en sortir de façon radiale, ce qui permet de refroidir, notamment, les chignons 5 du bobinage du stator 4. Les ouvertures d'entrée d'air du palier arrière sont, par exemple, globalement de forme trapézoïdale.

Il pourra être également prévu un capot de protection ajouré 21 qui coiffe le dispositif de redressement de courant et le dispositif régulateur de tension 14.

On notera (figure 1) que le corps du stator est monté dans les jupes des paliers 16, 17 via un joint élastique 40 en appui sur un épaulement de la jupe du palier 16 et via des tampons élastiques 41 montés dans la jupe du palier 17 épaulé à cet effet. En variante, le corps du stator 14 est emmanché à force dans les jupes des paliers 16, 17.

Selon les modes de réalisations illustrés, l'un des paliers, ici le palier arrière, pourra porter le dispositif de redressement de courant et/ou le dispositif régulateur de tension 14, partiellement visibles à la figure 1, pour formation d'un ensemble appelé agencement de redressement de courant. En variante, c'est le palier avant qui porte le dispositif de redressement de courant et/ou le dispositif régulateur de tension comme visible à la figure 1 du document FR 2 744 575.

Une telle disposition permet de disposer d'une machine électrique et d'un dispositif de redressement de courant et/ou d'un dispositif régulateur de tension formant un ensemble mécanique prêt à monter dans le véhicule. En outre, elle permet de refroidir le dispositif de redressement et/ou le dispositif régulateur de tension par le flux d'air généré par le ou lesdits ventilateurs.

Ledit dispositif de redressement comprend un pont de redressement, par exemple triphasé, hexaphasé ou pentaphasé. En variante, il pourra être prévu plusieurs ponts de redressement de courant.

Le pont comporte, par exemple, un premier dissipateur de chaleur, appelé dissipateur négatif, portant des premiers éléments de redressement de courant, tels que des diodes ou des transistors du type MOSFET, un deuxième dissipateur de chaleur, appelé dissipateur positif, portant des seconds éléments de redressement de courant, tels que des diodes ou des transistors du type MOSFET, et un connecteur comportant un corps en matière électriquement isolante dans lequel sont noyées des branches électriquement conductrices. Ces branches sont localement apparentes et relient chacune un premier élément de redressement de courant d'un des dissipateurs à un second élément de redressement de courant de l'autre dissipateur, lesdits premier et second éléments de redressement étant à des potentiels différents. Chacune des sorties de phase de l'alternateur ou de l'alterno-démarreur est connectée électriquement à une branche du connecteur en un point milieu prévu entre les premiers et second éléments de redressement reliés à ladite branche.

Dans une forme de réalisation représentée par exemple dans le document FR 2 754 650, les branches du connecteur comportent des pattes de connexion à une sortie de chacune des phases et deux des branches sont prolongées et dotées à leur extrémité libre d'un demi anneau pour connexion au dispositif régulateur de tension 14. Autrement dit, comme détaillé plus loin, le dispositif régulateur de tension conforme à l'invention est dans un mode de réalisation connecté à des branches conductrices reliées à deux des phases du moteur. En variante, comme visible à la figure 1 de ce document FR 2 754 650 deux des branches sont prolongées et dotées à leur extrémité libre d'un anneau pour connexion au dispositif régulateur de tension 14.

Le dissipateur de chaleur négatif, est constitué par exemple par l'un des paliers 16, 17 en Aluminium du carter 1 de l'alternateur relié à la masse du véhicule automobile, tandis que le dissipateur de chaleur positif par exemple en Aluminium, est porté à isolation électrique par ce palier et est muni d'une borne, appelée borne B+, destinée à être reliée à la borne positive de la batterie du véhicule via un câble.

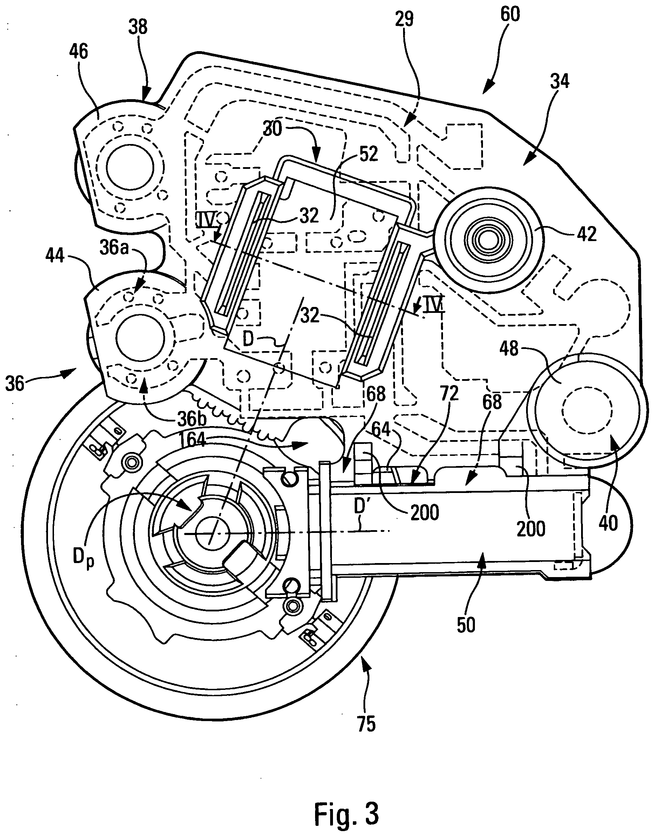

Les diodes de redressement de courant sont, par exemple, emmanchées à force respectivement dans le dissipateur négatif et dans le dissipateur positif comme visible par exemple dans la figure 14 du document WO 02/054566 ou dans la figure 3 du document WO 02/093717. Le pont de la figure 1 est ici du type de la figure 3 du document WO 02/093717.

Dans ce mode de réalisation, comme décrit dans le document FR 2 807 583, le dissipateur de chaleur positif pourra également comporter à l'une de ses extrémités un prolongement en forme d'oreille trouée pour contact électrique avec le dispositif régulateur de tension et liaison électrique avec la borne positive de la batterie via la borne B+ de ce dissipateur de chaleur positif.

Bien entendu le nombre d'éléments de redressement de courant dépend des applications et notamment du nombre de phases et de ponts redresseur de courant de la machine. Ainsi il est prévu trois diodes négatives et trois diodes positives dans le mode de réalisation du document WO 02/093717 relatif à un alternateur du type triphasé comportant un pont redresseur de courant. Dans le document US 7 019 424 il est prévu six diodes négatives et six diodes positives et deux ponts redresseurs de courant, l'alternateur étant du type double triphasé.

La figure 2, qui est une vue en perspective analogue à la figure 8 du document US 7 019 424 montre ce type de réalisation.

Ainsi, selon ce mode de réalisation de l'invention, on pourra utiliser un capot de protection 112, ici en matière plastique, doté d'ouvertures 140, 300 et 160 de passage d'air.

Le dispositif de redressement de courant comprend un pont redresseur de courant 200 alternatif en courant continu comportant un dissipateur de chaleur positif 100, notamment doté d'ailettes 400 et/ou d'une borne 500 constituant la borne B+, un connecteur 90 doté de pattes (non référencées), par exemple saillantes en forme de pinces pour fixation par sertissage des sorties de phases du bobinage du stator, et un dissipateur de chaleur négatif constitué par le palier arrière 17. Ce palier comporte, par exemple, un fond transversal par rapport à l'axe de symétrie axiale X-X confondu avec l'axe de l'arbre 3 de la figure 1. Ce fond est doté à sa périphérie externe d'ouvertures de montage des diodes. Sa périphérie interne présente, notamment, une pluralité d'ouvertures d'entrée d'air dont l'une est visible en 118. Ces ouvertures 118, ici globalement de forme trapézoïdale, sont délimitées latéralement par des bras séparant deux ouvertures 118 consécutives, et/ou intérieurement par un anneau central délimitant une ouverture centrale 218 pour passage du collecteur équipé des bagues collectrices 13 et de l'extrémité axiale arrière de l'arbre du rotor. L'axe X-X passe par le centre de l'ouverture 218. Ce fond est prolongé à sa périphérie externe par une jupe 161 d'orientation axiale par rapport à l'axe X-X munie d'ouvertures de sortie d'air 162 de forme oblongue. Il est prévu également une oreille de fixation 163 sur une partie fixe du véhicule. L'exemple de dispositif régulateur de tension 14 conforme à l'invention illustré à cette figure est intercalé entre les extrémités circonférentielles du dissipateur positif 10, prévu troué pour le montage des diodes positives.

Le dispositif régulateur de tension appartient à l'agencement de redressement de courant comportant le palier arrière 17 et le dispositif de redressement de courant.

On donne maintenant une description détaillée du dispositif de régulation de tension 14 conforme à l'invention.

Comme illustré aux figures 3 à 5, il comprend un support 34 et un ou plusieurs composants électroniques 28, dit(s) dans la suite circuit électronique de commande, aptes à participer à la commande de ladite machine électrique. Comme déjà dit, il comprend aussi un porte-balais 50. Ledit support 34 est en matériau isolant tel que, par exemple, du PPS.

Le circuit électronique de commande 28 est constitué, par exemple, d'un circuit à semi-conducteur ou puce électronique, notamment du type ASIC. Il assure une régulation de la tension délivrée au réseau de bord par la machine électrique tournante. Pour cela, il contrôle, par exemple, le courant délivré au bobinage d'excitation du rotor, notamment, en fonction de différentes données d'entrée telles que, entres autres, la tension disponible aux bornes de la batterie, la vitesse de rotation du moteur thermique et/ou la température du moteur thermique.

Le circuit électronique de commande 28 pourra aussi recevoir dans ce mode de réalisation des informations sur deux des phases du bobinage du stator pour que le régulateur travaille dans de bonnes conditions par suppression des tensions parasites comme indiqué par exemple dans le document FR 2 649 797. Il pourra encore permettre un fonctionnement de la machine en mode alterno-démarreur comme décrit dans le document FR 2 745 444 qui ainsi qu'on le sait est un alternateur réversible permettant également de transformer de l'énergie électrique en énergie mécanique notamment pour démarrer le moteur thermique.

Ledit circuit électronique de commande 28 est relié à différentes bornes de connexion du dispositif régulateur 14 par l'intermédiaire de traces électriques 29 noyées dans le support 34, illustrées en pointillé à la figure 3.

Il s'agit, par exemple, d'une borne de connexion 36 en deux demi-anneaux 36a, 36b, destinée à être connectée à la borne correspondante du dispositif de redressement, liée à deux des phases du moteur comme décrit dans le document FR 2 754 650 précité. Selon ce mode de réalisation, le support 34 du régulateur 14 pourra présenter des saillies et des renfoncements complémentaires (non-représentés) pour isoler les demi-anneaux et créer un passage pour une vis de fixation.

Il s'agit encore d'une borne de connexion 38, destinée à être reliée électriquement de manière précitée à la borne B+, et/ou d'une borne de connexion 40, destinée à être fixée sur une cheminée du palier 17 (visible à la figure 1) pour liaison électrique avec la masse via cette cheminée.

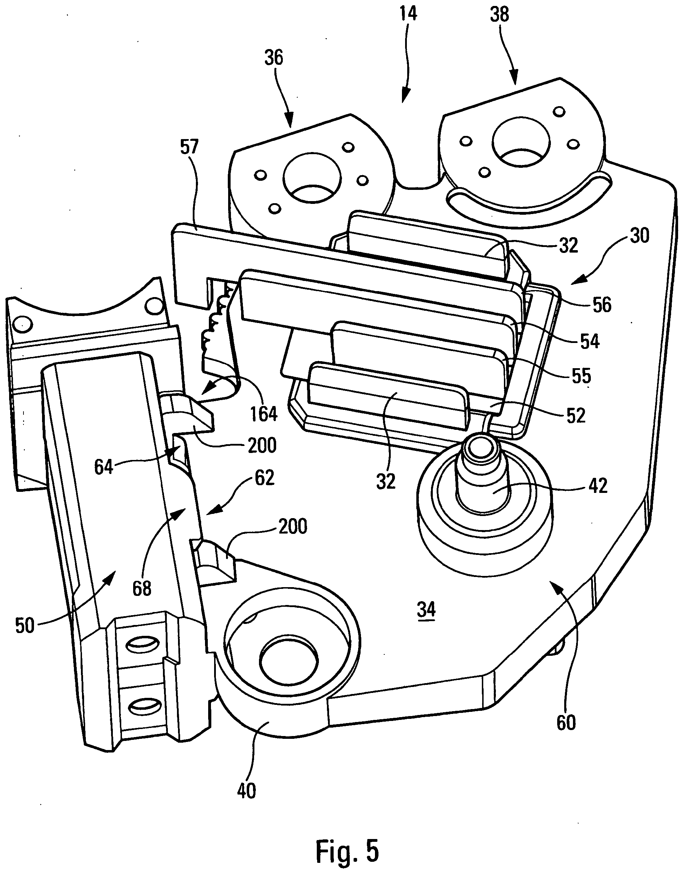

Le régulateur pourra encore comporter un connecteur 42 relié par une ou plusieurs des traces électriques 29 au circuit électronique de commande 28 pour, notamment, des prises d'information sur la vitesse de rotation et la température du moteur thermique du véhicule automobile via des liaisons filaires reliant le connecteur 42 à une unité électronique de contrôle du moteur thermique du véhicule. Ledit connecteur est apte à être relié directement à un conducteur électrique externe au dispositif. En variante, il est relié au capot comportant pour ce faire au moins une trace électrique noyée dans le corps du capot en matière électriquement isolante et reliée à un connecteur porté par le capot. Dans ce cas, comme visible dans les figures 3 et 5, le connecteur 42 consiste en une borne. Bien entendu, en variante, il est prévu deux bornes. Tout dépend des applications et du nombre d'informations reçues par le dispositif 14.

Le dispositif régulateur conforme à l'invention comporte, par exemple trois oreilles de fixation 44, 46, 48 trouées centralement pour fixation du régulateur au palier à l'aide de vis. Lesdites borne de connexions 36 à deux des phases du moteur, 38 à la borne B+ et 40 à la masse sont, par exemple, respectivement prévues au niveau desdites oreilles 44, 46, 48. En variante, de manière précitée, il est prévu deux oreilles pour chacune des connexions à l'une des phases au lieu d'une seule oreille 44. Ces oreilles pourront conserver une localisation standard les unes par rapport aux autres d'une génération de dispositif régulateur à l'autre afin de pouvoir les fixer sur un même support.

L'oreille 48 destinée à être fixée au palier 17 est la plus proche du porte-balais 50, tandis que les deux autres oreilles 44, 46 sont à proximité l'une de l'autre et/ou adjacentes au circuit électronique de commande 28, l'oreille 44 correspondant à la borne de connexion 36 à deux des phases de la machine électrique étant la plus proche du porte-balais 50 que l'oreille 46 correspondant à la borne de connexion à la borne B+.

Ledit circuit de commande 28 est situé, par exemple, entre le connecteur 42 et les deux oreilles 44, 46 à proximité l'une de l'autre, de même que le dissipateur 30.

Il ressort de ce qui précède que le dispositif régulateur 14 selon l'invention est adapté à se monter en lieu et place de celui de la figure 8 du document US 7019424 précité, avantageusement sans modifications des liaisons électriques du dispositif 14 avec le dissipateur positif 100, avec les deux sorties de phases du connecteur et avec les deux phases du connecteur 90.

Le support comprend une première partie 60, où le circuit électronique 28 est monté. Ladite première partie 60 présente, par exemple deux faces opposées 61, 61', notamment, parallèles de sorte que ladite première partie 60 du support 34 est sensiblement plane. Ladite première partie 60 présente un bord 62, équipé dudit porte-balais 50. Ce dernier est muni d'au moins un logement, dit logement porte-balai, apte à accueillir un balai ; le ou les balais permettant d'établir une liaison électrique avec le rotor de la machine électrique.

En l'occurrence, il est prévu deux logements, situés l'un au dessus de l'autre, comme visible à la figure 5, et présentant une même orientation D', pour un premier balai destiné à être relié à une source délivrant le courant d'excitation du rotor, tel que déterminé par le circuit électronique de commande 28, et pour un second balai destiné à être relié à la masse, comme visible à la figure 1.

Ledit support 34 est configuré, par exemple, de façon à pouvoir être fixé en permettant une orientation du ou des logements porte-balais 50 en direction de l'axe du rotor.

Le dissipateur positif 100 et le support 34 du régulateur 14 qui prolonge circonférentiellement ledit dissipateur positif 100 définissent une ouverture centrale, dite d'aspiration d'air, non visible sur les figures, située dans le prolongement axial de l'ouverture centrale 218 du palier 17. Ledit porte-balais est orienté, notamment, en direction de ladite ouverture d'aspiration d'air.

Ledit porte-balais 50 est, par exemple, de forme globalement parallélépipédique. Les logements sont, notamment, de section globalement rectangulaire pour montage dans chacun de ceux-ci des balais. Les balais pourront être sollicités radialement par un ressort en direction de la bague collectrice 3 concernée. Chaque balai est relié, par exemple à l'aide d'une tresse électriquement conductrice, à une borne électrique elle-même reliée électriquement à une des traces électriques 29 noyées dans le support 34. Ces traces sont reliées électriquement au circuit de commande électronique 28 du régulateur 14.

Selon l'invention, le dispositif régulateur est configuré pour autoriser une circulation d'air à travers ladite première partie 60 du support 34, au contact du ou desdits porte-balais. En particulier, il est configuré pour permettre une circulation d'air d'une face 61 à l'autre 61' de ladite première partie 60, au niveau du bord 62.

Pour cela on pourra prévoir une ou des fentes 64, dites de circulation d'air, à travers le support 34 entre ladite première partie 60 et le porte-balais 50.

Le support 34 pourra être configuré pour recouvrir au moins une ouverture d'air 118 du palier 17. Dans ce mode de réalisation, il pourra aussi être configuré pour que la ou les fentes 64 soient implantées en regard de l'une des ouvertures d'air 118. La ou lesdites fentes 64 de circulation d'air, s'allongent le long d'une face 72 du porte-balais.

La ou lesdites fentes 64 de circulation d'air sont prévues de contour fermé.

On prévoit également un dégagement 164 au niveau de l'extrémité interne du porte-balais. Ce dégagement ouvert vers l'intérieur affecte le bord latéral du dispositif 14 s'étendant entre l'oreille 44 et la périphérie interne du porte-balais 50. On augmente de la sorte le passage d'air et le refroidissement du porte-balais et des balais. Le dégagement 164 porte, éventuellement, un marquage d'indentification.

Les ponts de matière 68 restant entre la première partie 60 et le porte-balais permettent d'assurer la liaison mécanique entre ces deux zones du dispositif régulateur 14 et le passage des traces électriques 29. A ce sujet des nervures de renfort 200 pourront être prévues entre la première partie 60 du support 34 et le porte-balais 50. Elles sont ici au nombre de deux. Elles sont prévues, par exemple, de part et d'autre de la fente 64.

Le dispositif régulateur comprend aussi, par exemple, un dissipateur de chaleur 30, présentant des ailes de dissipation de chaleur 32, parallèles, positionné sur le support 34.

Ledit dissipateur est en relation d'échange thermique avec le circuit électronique de commande 28 afin d'assurer son refroidissement, notamment, par l'intermédiaire du flux d'air traversant le palier arrière. Le dissipateur 28 se trouve, notamment, au dessus du circuit de commande 28. Le dissipateur 30 est, notamment, surmoulé dans le support 34.

Ledit support 34 pourra être prévu apte à être monté sur la machine électrique de façon à ce que les ailes 32 du dissipateur 30 puissent orienter un flux d'air vers une zone de dépression Dp prévue entre ledit support et ladite machine. On améliore de la sorte la dissipation thermique.

Ladite zone de dépression se situe, notamment, au niveau de ladite ouverture d'aspiration d'air.

En particulier, lesdites ailes 32 sont orientées pour diriger le flux d'air radialement, c'est-à-dire, vers l'axe du rotor de la machine électrique et vers l'ouverture centrale d'aspiration d'air. Ce flux d'air est ensuite dirigé dans axialement vers l'ouverture 218. On peut noter qu'à la figure 3, on voit un collecteur 75 du type de celui décrit dans le document FR 2 710 200. Ce collecteur 75 est monté sur l'extrémité arrière de l'arbre 3 et traverse l'ouverture centrale 218 du palier 17 dans laquelle est montée, de manière connue, une bague (non référencée à la figure 1) intercalée radialement entre le bord de l'ouverture 218 et la périphérie externe de la bague externe du roulement 20. Cette bague comporte un fond (non référencé à la figure 1) traversé par le collecteur. Ce fond est ajouré et comporte à cet effet une pluralité d'ouvertures circonférentiellement de forme oblongue. La bague permet d'absorber les phénomènes de dilatation se produisant entre le palier 17 et le roulement 20.

Le dissipateur 30 comprend, par exemple, une base 52, en relation d'échange thermique avec le circuit électronique de commande 28. Lesdites ailes 32 s'étendent alors à partir de ladite base 52. Ledit circuit de commande 28 est, notamment, centré sur ladite base. Le rapport de surface dudit circuit 28 sur celui de ladite base 52 est, par exemple, compris entre 30 et 60%.

Lesdites ailes 32 pourront s'étendre sensiblement perpendiculairement par rapport à ladite base 52. Ledit dissipateur 30 présente un axe D, parallèle aux ailes 32, orienté vers ladite zone de dépression. Autrement dit, l'axe D est, par exemple, orienté radialement par rapport à l'axe du rotor.

L'axe D du dissipateur 30 et l'axe D' du ou des logements porte-balais forment, par exemple, un angle supérieur à 10° tel qu'un angle compris entre 40 et 90°, notamment un angle d'environ 66°, qui donne de bons résultats.

Selon l'exemple de réalisation illustré à la figure 3, le dissipateur comprend, par exemple, deux dites ailes 32 de dissipation s'étendant depuis des bords latéraux de la base 52, de façon à présenter un profil en U.

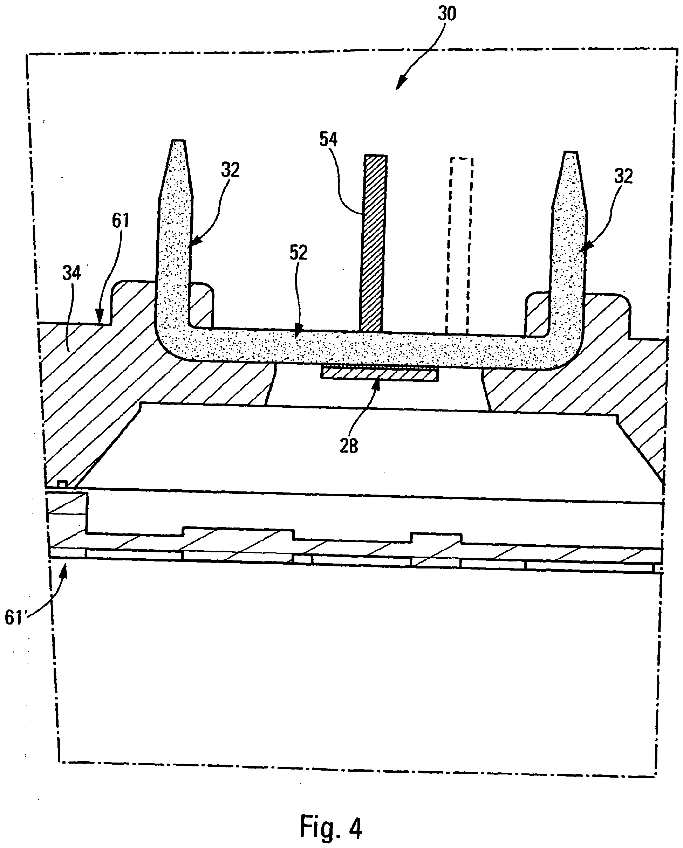

Selon une variante de réalisation, illustré aux figures 4 et 5, le dissipateur 30 comprend au moins une ailette de dissipation supplémentaire de chaleur 54, 55, 56 placée entre lesdites deux ailes de dissipation 32.

Ladite ailette supplémentaire 54 est, par exemple, située de façon médiane, c'est-à-dire juste au dessus du circuit 28 pour mieux refroidir le ou les composants électroniques du circuit électronique. Autrement dit, le dissipateur présente un profil en E comme visible à la figure 4.

Il pourra être prévu au moins une autre ailette de dissipation de chaleur. A la figure 4, une telle ailette est représentée en pointillés. A la figure 5, il est prévu deux autres ailettes supplémentaires, par exemple à mi-distance entre la première 54 et les ailes dissipation 32 s'étendant depuis les bords latéraux de la base 52 du dissipateur 30.

Ladite ailette médiane 54 pourra se prolonger axialement dans l'axe D au-delà de la base 52 du dissipateur 30 et ce en direction de l'ouverture d'aspiration d'air pour mieux évacuer la chaleur. Dans une variante cette ailette médiane est encore prolongée axialement dans l'axe D vers l'intérieur pour s'étendre au-delà du support 34 et être placée en regard de l'ouverture d'aspiration d'air. Une autre 56 des ailettes pourra présenter un prolongement 57 dirigé axialement vers l'intérieur parallèlement à l'axe D en sorte que ce prolongement est adapté à être placé en regard de l'ouverture d'aspiration d'air. Dans un mode de réalisation, le prolongement présente une extrémité interne perpendiculaire au support 34 comme visible à la figure 5. Ce prolongement est dirigé vers l'ouverture d'aspiration d'air. Autrement dit, ladite ailette 56 présente un profil en L. Lesdites ailettes 54, 55, 56 présentent ainsi une longueur croissante.

Bien entendu, tout dépend des applications, l'ailette médiane 54 présentant dans une variante une forme en L identique à celle de l'ailette 56. Toutes les combinaisons de forme et de nombre d'ailettes sont possibles.

Ledit dissipateur 30 est dans un mode de réalisation métallique, par exemple, réalisé en cuivre. Autrement dit, les composants du dissipateur, base 52 et/ou ailes de dissipation 32, 54 sont en cuivre. Il pourra s'agir d'une nuance de cuivre présentant un coefficient de conductivité situé entre 350 et 400 W/m.K et/ou un coefficient de dilatation thermique situé entre 15 et 20.

La base 52 du dissipateur et les ailes de dissipation 32 qui en sont issues pourront être obtenues par pliage.

Le dissipateur 30, en particulier sa base 52, est en contact avec le circuit électronique de commande 28, par exemple par colle argent. Dans une variante, la base est contact indirect avec le ou les composants électroniques par l'intermédiaire d'un substrat intercalé entre la base et le ou lesdits composants électroniques.

La ou les ailettes de dissipation supplémentaires 54 pourront être rapportées sur la base 52 du dissipateur, par exemple par soudage laser. Elle ou elles présentent, notamment, une épaisseur plus faible que celle des ailes dilatations 32 issues de la base 52.

En variante, elles pourront être rapportées sur la base 52 en étant insérées dans une fente ou des rainures prévues dans la base 52. Dans ce cas, la ou les ailettes sont en matériau caloporteur tout comme le dissipateur. Elles sont dans une matière identique à celle du dissipateur 30 ou en variante en une matière différente, le dissipateur étant par exemple en cuivre et les ailettes en aluminium ou toute autre matière permettant d'ajuster le transfert de chaleur. En variante l'une des ailettes est en cuivre et la ou les autres ailettes en matière différente par exemple Aluminium Les rainures pourront être délimitées par une paire de nervures. Elles permettent de disposer d'un dissipateur standard auquel est ajouté un nombre plus ou moins grand d'ailettes en fonction des besoins.

A la figure 2, seules les ailes de dissipation 32 et le porte-balais 50 du dispositif régulateur de tension 14 sont représentés en détail, les autres détails, en particulier les bornes de connexion ayant été omis pour simplification.

Selon une approche, ledit dispositif régulateur 14 comprend deux parties : une partie électronique avec le circuit électronique de commande 28 et les traces électriques 29 et une partie mécatronique avec le support 34 dont les cages porte -balais, équipées, ainsi que le dissipateur 30.

Ainsi qu'il ressort de ce qui précède et des dessins, les prolongements des ailettes 54, 56 sont dirigés vers une ouverture centrale de la machine, constituée par l'ouverture centrale d'aspiration d'air. Ces prolongements sont adaptés à être placés au moins entre le support 34 et ladite ouverture centrale, le prolongement 57 pénétrant dans cette ouverture centrale.

Le support 34 recouvre au moins partiellement une ouverture d'entrée d'air 118, tandis que dans ce mode de réalisation les ailettes du dissipateur de chaleur positif 100 autorisent un passage axial d'un flux d'air à travers les dites ouvertures comme représenté dans les figures 1 et 5 du document US 7 019 424 précité. Le passage à travers ces ouvertures 118 dépend des applications et de la forme du ou des ponts redresseurs de courant.

L'ouverture centrale d'aspiration d'air constitue une zone de dépression prévue entre le support 34 et la machine électrique tournante.

On appréciera que l'alternateur est plus robuste car le circuit électronique du dispositif régulateur de tension est plus sensible à l'élévation de température que le ou les ponts redresseurs de courant, qui peuvent fonctionner à des températures limites données par la technologie par exemple de l'ordre de 225°. Grâce à l'invention on diminue la température du circuit électronique du dispositif régulateur de tension, qui ne doit pas fonctionner à des températures à la limite de la technologie du circuit électronique, par exemple à 150° dans le cas d'un circuit électronique sous la forme d'un semi conducteur. L'orientation du dissipateur de chaleur, qui peut être doté d'au moins une ailette supplémentaire, permet également de diminuer la température du circuit électronique. Dans un mode de réalisation dégradé, l'orientation du dissipateur de chaleur est différente de l'orientation décrite ci-dessus.

## Revendications

1. Dispositif régulateur de tension pour une machine électrique tournante, notamment alternateur et/ou alterno-démarreur de véhicule automobile, comprenant un support (34) et un ou plusieurs composants électroniques (28), aptes à participer à la commande de ladite machine électrique, le support comprenant une première partie (60), où le ou les composants sont montés, ladite première partie présentant un bord (62), équipé d'un porte-balais (50) muni d'au moins un logement, dit logement porte-balai, apte à accueillir un balai (15) permettant d'établir une liaison électrique avec un rotor (3) de la machine électrique, **caractérisé en ce que** ledit dispositif est configuré pour autoriser une circulation d'air à travers ladite première partie du support, au contact dudit porte-balais, ledit dispositif comportant une ou des fentes (64), dites de circulation d'air, lesdites fentes étant prévues à travers le support entre ladite première partie et ledit porte-balais, une fente de circulation d'air s'allongeant le long d'une face (72) du porte-balais.

2. Dispositif selon la revendication précédente dans lequel la ou lesdites fentes de circulation d'air sont prévues de contour fermé.

3. Dispositif selon l'une quelconque des revendications précédentes, comprenant en outre un dissipateur de chaleur (30), en relation d'échange thermique avec le ou lesdits composants, ledit support étant prévu apte à être monté sur la machine électrique de façon à ce que le dissipateur puisse orienter un flux d'air vers une zone de dépression prévue entre ledit dispositif régulateur et ladite machine.

4. Dispositif selon la revendication 3 dans lequel le dissipateur comprend une base (52), en relation d'échange thermique avec le ou lesdits composants électroniques, et des ailes (32), s'étendant à partir de ladite base, ledit support étant apte à être monté sur la machine électrique de façon à ce que lesdites ailes puissent orienter le flux d'air vers ladite zone de dépression.

5. Dispositif selon la revendication 4 dans lequel lesdites ailes (32) s'étendent sensiblement perpendiculairement par rapport à ladite base (52), ledit dissipateur présentant un axe D, parallèle aux ailes, orienté vers ladite zone de dépression.

6. Dispositif selon la revendication 5 dans lequel le ou les logements porte-balais sont orientés selon une direction D' et dans lequel l'axe D du dissipateur et l'axe D' du logement porte-balais forment un angle supérieur à 10°.

7. Dispositif dans lequel selon l'une quelconque des revendications 4 à 6 dans lequel le dissipateur comprend deux dites ailes s'étendant depuis des bords latéraux de la base, de façon à présenter un profil en U et au moins une ailette de dissipation supplémentaire (54, 55, 56) placée entre lesdites deux ailes (32).

8. Dispositif selon la revendication 7 dans lequel la ou lesdites ailettes se prolongent axialement vers l'intérieur au-delà de la base.

9. Dispositif selon la revendication 8 dans lequel l'une (56) des ailettes présente un prolongement (57), apte à être placé entre ledit support et une ouverture centrale d'entrée d'air de ladite machine électrique.

10. Dispositif selon l'une quelconque des revendications 3 à 9 dans lequel ledit dissipateur, réalisé en cuivre, est en contact avec le ou les composants.

11. Dispositif selon l'une quelconque des revendications précédentes dans lequel des nervures de renfort (200) sont prévues entre la première partie (60) du support (34) et le porte-balais (50).

12. Palier de machine électrique tournante équipé d'un dispositif régulateur selon l'une quelconque des revendications précédentes.

13. Palier selon la revendication 12 dans lequel le support (34) recouvre au moins une ouverture d'air (118) du palier (17) et dans lequel la ou les fentes (64) sont implantées en regard de l'une ou plusieurs des ouvertures d'air (118).

14. Machine électrique tournante équipée d'un palier selon l'une quelconque des revendications 12 ou 13.

## Patentansprüche

1. Spannungsregelvorrichtung für eine elektrische Drehmaschine, insbesondere Wechselstromgenerator und/oder Startergenerator für ein Kraftfahrzeug, umfassend einen Träger (34) und eine oder mehrere elektronische Komponenten (28), die geeignet sind, an der Steuerung der elektrischen Maschine teilzunehmen, wobei der Träger einen ersten Teil (60) aufweist, wo die Komponente oder die Komponenten befestigt ist/sind, wobei der erste Teil einen Rand (62) aufweist, der mit einem Bürstenhalter (50) ausgestattet ist, der mit mindestens einer Aufnahme, der sogenannten Bürstenhalteraufnahme, versehen ist, die geeignet ist, eine Bürste (15) aufzunehmen, die ermöglicht, eine elektrische Verbindung mit einem Rotor (3) der elektrischen Maschine herzustellen, **dadurch gekennzeichnet, dass** die Vorrichtung konfiguriert ist, um eine Luftzirkulation durch den ersten Teil des Trägers bei Kontakt des Bürstenhalters zu ermöglichen, wobei die Vorrichtung einen oder mehrere Schlitze (64), die sogenannten Luftzirkulationsschlitze, aufweist, wobei die Schlitze durch den Träger zwischen dem ersten Teil und dem Bürstenhalter vorgesehen sind, wobei sich ein Luftzirkulationsschlitz entlang einer Fläche (72) des Bürstenhalters verlängert.

2. Vorrichtung nach dem vorhergehenden Anspruch, wobei der oder die Luftzirkulationsschlitze mit geschlossener Kontur vorgesehen ist/sind.

3. Vorrichtung nach einem der vorhergehenden Ansprüche, ferner umfassend einen Wärmeableiter (30), der im Wärmeaustausch mit der Komponente oder den Komponenten steht, wobei der Träger vorgesehen ist, geeignet zu sein, auf der elektrischen Maschine derart befestigt zu werden, dass der Wärmeableiter einen Luftstrom zu einem Unterdruckbereich lenken kann, der zwischen der Regelvorrichtung und der Maschine vorgesehen ist.

4. Vorrichtung nach Anspruch 3, wobei der Wärmeableiter eine Basis (52), die im Wärmeaustausch mit der elektronischen Komponente oder den elektronischen Komponenten steht, und Rippen (32) aufweist, die sich von der Basis aus erstrecken, wobei der Träger geeignet ist, auf der elektrischen Maschine derart befestigt zu werden, dass die Rippen den Luftstrom zu dem Unterdruckbereich lenken können.

5. Vorrichtung nach Anspruch 4, wobei sich die Rippen (32) im Wesentlichen senkrecht zu der Basis (52) erstrecken, wobei der Wärmeableiter eine Achse D aufweist, die parallel zu den Rippen ist und die zu dem Unterdruckbereich ausgerichtet ist.

6. Vorrichtung nach Anspruch 5, wobei die Bürstenhalteraufnahme oder die Bürstenhalteraufnahmen in eine Richtung D' ausgerichtet ist/sind und wobei die Achse D des Wärmeableiters und die Achse D' der Bürstenhalteraufnahme einen Winkel, der größer als 10° ist, bilden.

7. Vorrichtung wobei nach einem der Ansprüche 4 bis 6, wobei der Wärmeableiter zwei Rippen, die sich von den seitlichen Rändern der Basis derart erstrecken, dass sie ein U-Profil aufweisen, und mindestens eine zusätzliche Ableitungsrippe (54, 55, 56) aufweist, die zwischen den zwei Rippen (32) angeordnet ist.

8. Vorrichtung nach Anspruch 7, wobei sich die Rippe oder die Rippen axial nach innen über die Basis hinaus verlängert/verlängern.

9. Vorrichtung nach Anspruch 8, wobei eine der Rippen (56) eine Verlängerung (57) aufweist, die geeignet ist, zwischen dem Träger und einer mittleren Lufteinlassöffnung der elektrischen Maschine angeordnet zu sein.

10. Vorrichtung nach einem der Ansprüche 3 bis 9, wobei der Wärmeableiter, der aus Kupfer hergestellt ist, in Kontakt mit der Komponente oder den Komponenten ist.

11. Vorrichtung nach einem der vorhergehenden Ansprüche, wobei Versteifungsrippen (200) zwischen dem ersten Teil (60) des Trägers (34) und dem Bürstenhalter (50) vorgesehen sind.

12. Lager für eine elektrische Drehmaschine, die mit einer Regelvorrichtung nach einem der vorhergehenden Ansprüche ausgestattet ist.

13. Lager nach Anspruch 12, wobei der Träger (34) mindestens eine Luftöffnung (118) des Lagers (17) bedeckt und wobei der Schlitz oder die Schlitze (64) gegenüber von einer oder mehreren Luftöffnungen (118) eingesetzt ist/sind.

14. Elektrische Drehmaschine, die mit einem Lager nach einem der Ansprüche 12 bis 13 ausgestattet ist.

## Claims

1. Voltage regulator device for a rotating electrical machine, in particular an alternator and/or alternator-starter of a motor vehicle, comprising a support (34) and one or more electronic components (28), capable of participating in the control of said electrical machine, the support comprising a first part (60), where the component or components are mounted, said first part having an edge (62), equipped with a brush-holder (50) provided with at least one housing, called brush-holder housing, capable of accommodating a brush (15) making it possible to establish an electrical link with a rotor (3) of the electrical machine, **characterized in that** said device is configured to allow a circulation of air through said first part of the support, in contact with said brush-holder, said device comprising one or more so-called air circulation slots (64), said slots being provided through the support between said first part and said brush-holder, an air circulation slot extending along a face (72) of the brush-holder.

2. Device according to the preceding claim, in which said air circulation slot or slots are provided with a closed outline.

3. Device according to any one of the preceding claims, further comprising a heat sink (30), in heat exchange relationship with said component or components, said support being designed to be able to be mounted on the electrical machine so that the heat sink can orient a flow of air to a low pressure zone provided between said regulator device and said machine.

4. Device according to Claim 3, in which the heat sink comprises a base (52), in heat exchange relationship with said electronic component or components, and blades (32) extending from said base, said support being able to be mounted on the electrical machine such that said blades can orient the flow of air towards said low pressure zone.

5. Device according to Claim 4, in which said blades (32) extend substantially at right angles relative to said base (52), said heat sink having an axis (D), parallel to the blades, oriented towards said low pressure zone.

6. Device according to Claim 5, in which the brush-holder housing or housings are oriented in a direction D' and in which the axis D of the heat sink and the axis D' of the brush-holder housing form an angle greater than 10°.

7. Device in which according to any one of Claims 4 to 6, in which the heat sink comprises two said blades extending from lateral edges of the base, so as to exhibit a U-shaped profile and at least one additional heat sink fin (54, 55, 56) placed between said two blades (32).

8. Device according to Claim 7, in which said fin or fins extend axially inwards beyond the base.

9. Device according to Claim 8, in which one (56) of the fins has an extension (57), which can be placed between said support and a central air inlet opening of said electrical machine.

10. Device according to any one of Claims 3 to 9, in which said heat sink, made of copper, is in contact with the component or components.

11. Device according to any one of the preceding claims, in which reinforcing ribs (200) are provided between the first part (60) of the support (34) and the brush-holder (50).

12. Rotating electrical machine bearing equipped with a regulator device according to any one of the preceding claims.

13. Bearing according to Claim 12, in which the support (34) covers at least one air opening (118) of the bearing (17) and in which the slot or slots (64) are located facing one or more of the air openings (118).

14. Rotating electrical machine equipped with a bearing according to either one of Claims 12 or 13.
